# EUROPEAN PATENT APPLICATION

(11) **EP 4 708 128 A1**
(43) Date of publication of application: **11.03.2026**
(21) Application number: 25160707.3
(22) Date of filing: 27.02.2025
(51) Int. Cl.: G06K 7/14

(54) **METHOD OF SCANNING AND RECOGNIZING SPECIAL-SHAPED CODE, DEVICE, AND STORAGE MEDIUM**

(30) Priority: 04.09.2024 CN 202411230495
(71) Applicant: Quantum cloud code (Fujian) Technology Co., Ltd., Fuzhou, Fujian 530000 (CN)
(72) Inventor: CHENG, Ye, Fuzhou (Fujian), 530000 (CN); TANG, Qiaoti, Fuzhou (Fujian), 530000 (CN); CHENG, Libang, Fuzhou (Fujian), 530000 (CN); LAI, Pengxu, Fuzhou (Fujian), 530000 (CN); DU, Zongfei, Fuzhou (Fujian), 530000 (CN); NING, Yipeng, Fuzhou (Fujian), 530000 (CN); YAO, Zhizhen, Fuzhou (Fujian), 530000 (CN)
(74) Representative: Ipsilon

(57) **Abstract**

A method of scanning and recognizing a special-shaped code includes: determining a target frame data stream size based on a screen parameter of a code scanning device and a frame data stream parameter (S110, S410, S510, S610); acquiring the coordinates of coordinate points of a special-shaped code region based on the target frame data stream size (S120, S220, S320, S520, S620); generating a mask image based on the target frame data stream size and the coordinates of the coordinate points of the special-shaped code region (S130, S230, S330, S430, S630); and processing a camera frame data stream based on the mask image to obtain a special-shaped code, and recognizing the special-shaped code to obtain a recognition result (S140, S240, S340, S440, S540, S642).

## Description

### TECHNICAL FIELD

The present application relates to the technical field of code scanning and, in particular, to a method and apparatus for scanning and recognizing a special-shaped code, a device, and a storage medium.

### BACKGROUND

To enhance an anti-counterfeiting property of a product label and incorporate some particular design elements in the product label, a manufacturer typically provides a product recognition code in a special pattern in the product label at present to make the shape of the product recognition code match that of the special pattern. The product recognition code in this shape is a special-shaped code. A user can acquire product information by scanning the special-shaped code with his mobile phone.

However, it is relatively novel to provide the special-shaped code in the product label at present, as a result, there is a lack of scanning and recognition technologies for the special-shaped code, making it difficult to recognize the special-shaped code in the product label.

### SUMMARY

To facilitate the recognition of special-shaped codes, embodiments of the present application provide a method and apparatus of scanning and recognizing a special-shaped code, a device, and a storage medium.

In a first aspect, an embodiment of the present application provides a method of scanning and recognizing a special-shaped code. The method includes the steps below.

A target frame data stream size is determined based on a screen parameter of a code scanning device and a frame data stream parameter.

The coordinates of coordinate points of a special-shaped code region are acquired based on the target frame data stream size.

A mask image is generated based on the target frame data stream size and the coordinates of the coordinate points of the special-shaped code region.

A camera frame data stream is processed based on the mask image to obtain a special-shaped code, and the special-shaped code is recognized to obtain a recognition result.

In a second aspect, an embodiment of the present application provides an apparatus of scanning and recognizing a special-shaped code. The apparatus includes a size determination module, a region acquisition module, a mask generation module, and a code image recognition module.

The size determination module is configured to determine a target frame data stream size based on a screen parameter of a code scanning device and a frame data stream parameter.

The region acquisition module is configured to acquire coordinates of coordinate points of a special-shaped code region based on the target frame data stream size.

The mask generation module is configured to generate a mask image based on the target frame data stream size and the coordinates of the coordinate points of the special-shaped code region.

The code image recognition module is configured to process a camera frame data stream based on the mask image to obtain a special-shaped code and configured to recognize the special-shaped code to obtain a recognition result.

In a third aspect, an embodiment of the present application provides a computer device including a memory and a processor. The memory stores a computer program, and the processor implements the preceding method when executing the computer program.

In a fourth aspect, an embodiment of the present application provides a computer-readable storage medium storing a computer program. When executed by a processor, the computer program implements the preceding method.

In a fifth aspect, an embodiment of the present application further provides a computer program product. The computer program product includes a computer program. When executed by a processor, the computer program implements the preceding method.

With the method and apparatus of scanning and recognizing the special-shaped code, the device, and the storage medium mentioned above, the target frame data stream size is determined based on the screen parameter of the code scanning device and the frame data stream parameter, the coordinates of the coordinate points of the special-shaped code region are acquired based on the target frame data stream size, the mask image is generated based on the target frame data stream size and the coordinates of the coordinate points of the special-shaped code region, and the camera frame data stream is processed based on the mask image to obtain the special-shaped code, and the special-shaped code is recognized to obtain the recognition result. Through the implementation of the preceding method, the target frame data stream size and the coordinates of the coordinate points of the special-shaped code region are calculated, which can facilitate further calculation of the mask image for indicating the region where the special-shaped code is located in the target frame data stream. Then, the special-shaped code is determined from the target frame data stream through the mask image so that further subsequent recognition of the special-shaped code is facilitated. Thus, the recognition of the special-shaped code on a product label (corresponding to the camera frame data stream) is facilitated.

### BRIEF DESCRIPTION OF DRAWINGS

To illustrate technical solutions in embodiments of the present invention more clearly, drawings used in the embodiments are briefly described below.
FIG. 1 is a diagram showing application environments of a method of scanning and recognizing a special-shaped code in an embodiment of the present application;
FIG. 2 is a flowchart of a method of scanning and recognizing a special-shaped code according to an embodiment of the present application;
FIG. 3 is a schematic diagram for showing frame data flow parameters according to an embodiment of the present application;
FIG. 4 is a flowchart of a method of scanning and recognizing a special-shaped code according to an embodiment of the present application;
FIG. 5 is a flowchart of a method of scanning and recognizing a special-shaped code according to an embodiment of the present application;
FIG. 6 is a flowchart of a method of scanning and recognizing a special-shaped code according to an embodiment of the present application;
FIG. 7 is a schematic diagram showing the process where contour coordinates of a special-shaped code are generated according to an embodiment of the present application;
FIG. 8 is a flowchart of a method of scanning and recognizing a special-shaped code according to an embodiment of the present application;
FIG. 9 is a flowchart of a method of scanning and recognizing a special-shaped code according to an embodiment of the present application;
FIG. 10 is a structural diagram of an apparatus of scanning and recognizing a special-shaped code according to an embodiment of the present application;
FIG. 11 is a structural diagram of a computer device according to an embodiment of the present application; and
FIG. 12 is a diagram showing the internal structure of a computer-readable storage medium according to an embodiment of the present application.

### DETAILED DESCRIPTION

To illustrate the object, technical solutions, and advantages of the present disclosure more clearly, the present disclosure is further described below in detail in conjunction with the drawings and the embodiments. It is to be understood that the embodiments described herein are intended to explain and not to limit the present disclosure.

It is to be noted that the terms "first", "second", and the like in the description, claims, and drawings of the present invention are used for distinguishing between similar objects and are not necessarily used for describing a particular order or sequence. It is to be understood that data used in this manner are interchangeable where appropriate so that the embodiments of the present invention described herein can be implemented in an order not illustrated or described herein. In addition, the terms "including", "having", and any variations thereof are intended to encompass a non-exclusive inclusion. For example, a process, method, apparatus, product, or device that includes a series of steps or units not only includes the expressly listed steps or units but may also include other steps or units that are not expressly listed or are inherent to such a process, method, product, or device.

The term "and/or" herein is used for only describing the association relationship between associated objects and indicates that three relationships may exist. For example, A and/or B may indicate that A exists alone, A and B exist simultaneously, and B exists alone. Additionally, the character "/" herein generally indicates an "or" relationship between associated objects before and after the character "/".

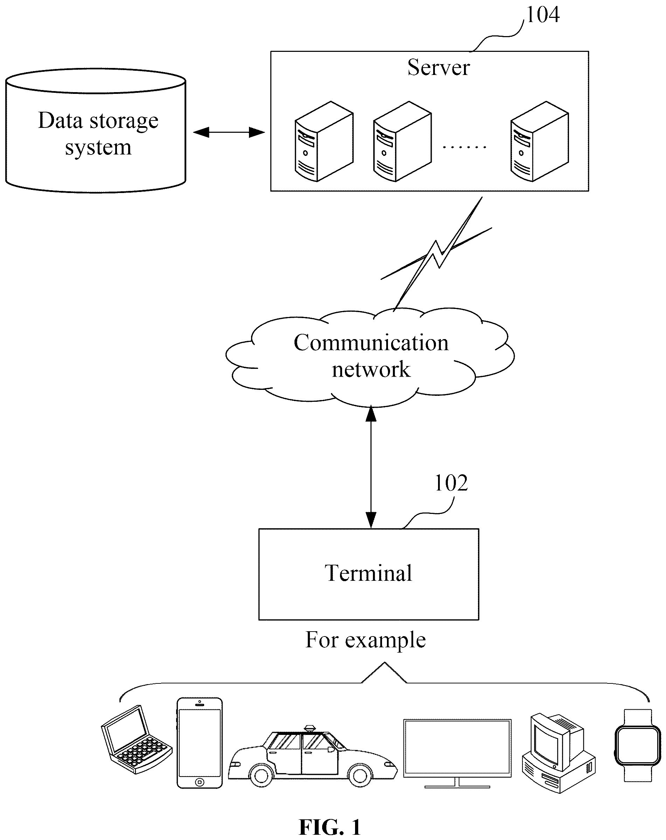

To solve the preceding problem, an embodiment of the present disclosure provides a method of scanning and recognizing a special-shaped code. The method is applicable in the application environments as shown in FIG. 1. A terminal 102 communicates with a server 104 through a network. A data storage system may store the data that the server 104 needs to process. The data storage system may be integrated on the server 104 or may be placed on a cloud or another network server. The terminal 102 may be, but is not limited to, a personal computer, a notebook computer, a smart phone, a tablet computer, an Internet of Things (IoT) device, and a portable wearable device. The IoT device may be a smart speaker, a smart television, a smart air conditioner, a smart in-vehicle device, or the like. The portable wearable device may be a smart watch, a smart bracelet, a head-mounted device, or the like. The server 104 may be implemented as an independent server or a server cluster that includes multiple servers.

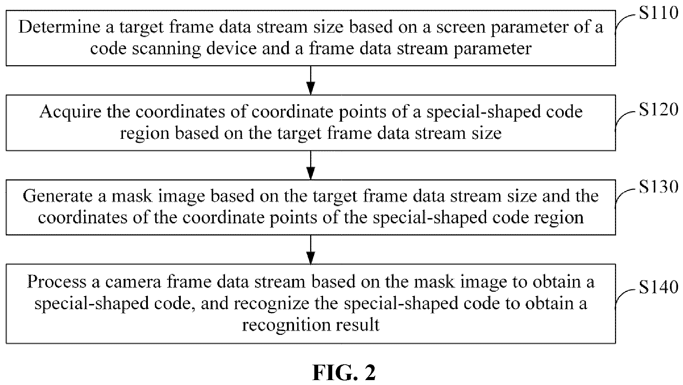

FIG. 2 is a flowchart of a method of scanning and recognizing a special-shaped code according to an embodiment of the present application. Referring to FIG. 2, the method may be performed by an apparatus performing this method. The apparatus may be implemented as software and/or hardware. The method includes the steps below.

In S110, a target frame data stream size is determined based on a screen parameter of a code scanning device and a frame data stream parameter.

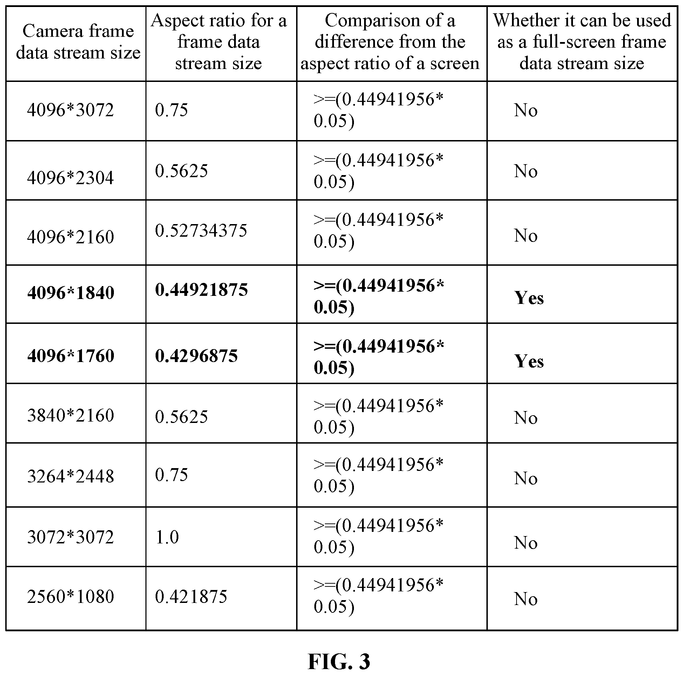

The code scanning device includes, but is not limited to, smart devices with a camera function, for example, a smart phone and a smart tablet. The screen parameter of the code scanning device includes, but is not limited to, a screen size. The screen size includes a screen width and a screen height. The frame data stream parameter refers to multiple frame data stream sizes preset by the code scanning device, for example, the multiple "camera frame data stream sizes" shown in FIG. 3. A program built in the code scanning device may select one of these frame data stream sizes so that the size of a frame data stream generated during the capture of the code scanning device is the selected frame data stream size. For example, assuming that a user selects a frame data stream size 4090 × 3072 on the code scanning device, the size of a frame data stream generated during capture subsequently performed by the user with the code scanning device is 4090 × 3072. During the capture, the code scanning device generates multiple consecutive image frames. The frame data stream refers to the multiple consecutive image frames. For example, when the code scanning device captures a product label in the shape of a five-pointed star, a frame data stream related to this product label is generated. The target frame data stream size refers to a frame data stream size that can cause the size of the frame data stream generated by the capture to fill the screen of the code scanning device. The screen parameter of the code scanning device and the frame data stream parameter are processed so that the target frame data stream size can be obtained.

For example, the code scanning device acquires and processes the screen parameter of the code scanning device and the frame data stream parameter so that the target frame data stream size is obtained.

In S120, the coordinates of coordinate points of a special-shaped code region are acquired based on the target frame data stream size.

A camera frame data stream refers to a frame data stream generated when the code scanning device captures the target where a special-shaped code is located. It is to be noted that the image format of a camera frame data stream initially obtained by the code scanning device is an NV21 format. After obtaining the camera frame data stream in the NV21 format, the code scanning device converts the camera frame data stream in the NV21 format into a camera frame data stream in an RGB format. Thus, the image format of the camera frame data stream is converted, thereby facilitating subsequent determination of the special-shaped code from the camera frame data stream in the RGB format. In this embodiment, the target where the special-shaped code is located may refer to a product label with the special-shaped code, such as the product label with the special-shaped code in the shape of a five-pointed star. The coordinates of the coordinate points of the special-shaped code region refer to the coordinates of the region where the special-shaped code is located in the camera frame data stream. The camera frame data stream scanned and acquired by the code scanning device is processed through the target frame data stream size so that the coordinates of the coordinate points of the special-shaped code region can be obtained.

For example, the acquired camera frame data stream is processed through the target frame data stream size so that the coordinates of the coordinate points of the special-shaped code region are obtained.

In S130, a mask image is generated based on the target frame data stream size and the coordinates of the coordinate points of the special-shaped code region.

The mask image refers to an image that has the same size as the target frame data stream. In this image, a black region is generated through the target frame data stream size and the coordinates of the coordinate points of the special-shaped code region. This black region has exactly the same shape, size, and position as the coordinates of the coordinate points of the special-shaped code region determined from the camera frame data stream. The target frame data stream size and the coordinates of the coordinate points of the special-shaped code region are processed so that the mask image can be generated.

For example, the target frame data stream size and the coordinates of the coordinate points of the special-shaped code region are processed so that the mask image is generated.

In S140, the camera frame data stream is processed based on the mask image to obtain the special-shaped code, and the special-shaped code is recognized to obtain a recognition result.

The special-shaped code refers to the image of the special-shaped code disposed on the target captured by the code scanning device. The camera frame data stream is processed through the mask image so that the special-shaped code can be obtained. The code scanning device can recognize the generated special-shaped code so that the corresponding result, that is, the recognition result is obtained.

For example, the code scanning device processes the camera frame data stream through the mask so that the special-shaped code is obtained. Furthermore, the code scanning device then recognizes the special-shaped code so that the corresponding recognition result is obtained.

It is to be noted that in this embodiment, the target frame data stream size is determined based on the screen parameter of the code scanning device and the frame data stream parameter, the coordinates of the coordinate points of the special-shaped code region are acquired based on the target frame data stream size, the mask image is generated based on the target frame data stream size and the coordinates of the coordinate points of the special-shaped code region, and the camera frame data stream is processed based on the mask image to obtain the special-shaped code, and the special-shaped code is recognized to obtain the recognition result. Through the implementation of the preceding method, the target frame data stream size and the coordinates of the coordinate points of the special-shaped code region are calculated, which can facilitate further calculation of the mask image for indicating the region where the special-shaped code is located in the target frame data stream. Then, the special-shaped code is determined from the target frame data stream through the mask image so that further subsequent recognition of the special-shaped code is facilitated. Thus, the recognition of the special-shaped code on the camera frame data stream is facilitated.

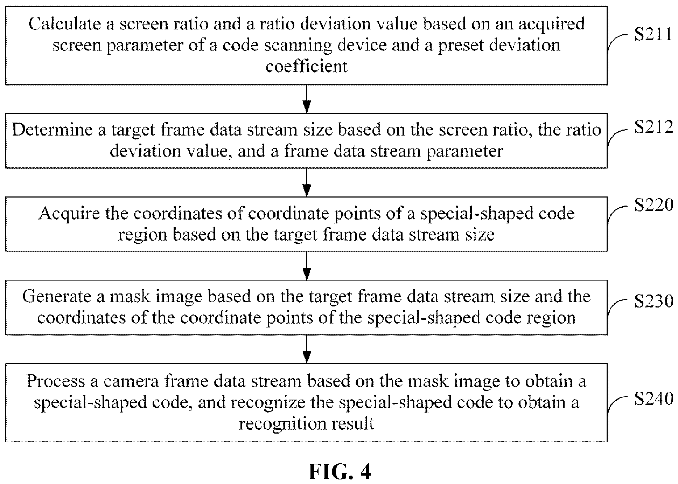

FIG. 4 is a flowchart of a method of scanning and recognizing a special-shaped code according to an embodiment of the present application. Referring to FIG. 4, the method optimizes the step in which "the target frame data stream size is determined based on the screen parameter of the code scanning device and the frame data stream parameter" in the above embodiment. It is to be noted that for parts not detailed in this embodiment, reference may be made to descriptions in other embodiments. The method includes the steps below.

In S211, a screen ratio and a ratio deviation value are calculated based on the acquired screen parameter of the code scanning device and a preset deviation coefficient.

In this embodiment, the screen parameter of the code scanning device may include a screen width and a screen height. The screen ratio refers to the ratio of the screen width to the screen height. The deviation coefficient is a preset value derived from historical empirical data. In this embodiment, the deviation coefficient is preset to 5%. The ratio deviation value refers to the product of the screen ratio and the deviation coefficient, that is, the screen ratio × 5% and is denoted as a deviation.

It is to be noted that the size of the camera frame data stream captured by the code scanning device may not be exactly equivalent to the screen size of the code scanning device. Moreover, the aspect ratio for each of most frame data stream sizes in the frame data stream parameter (the aspect ratio for each of the frame data stream sizes shown in FIG. 3) is not equivalent to the aspect ratio (the screen ratio) of the screen of the code scanning device. Therefore, it is necessary to set a ratio deviation value to allow a frame data stream size to exceed the screen size of the code scanning device. If a camera frame data stream with a size exceeding the aspect ratio of the screen is subsequently required for scanning and recognition, only the image data exceeding the range of the screen size needs to be cropped from the camera frame data stream. Additionally, it is determined according to historical experience that the optimal ratio deviation value is 5%. That is, when the size of the camera frame data stream exceeds the screen size by 5%, cropping the image data that exceeds the screen size by 5% does not have any adverse effect on scanning and recognition.

For example, the ratio of the screen width in the screen parameter of the code scanning device to the screen height in the screen parameter of the code scanning device is calculated to obtain the screen ratio. Furthermore, the product of the screen ratio and the preset deviation coefficient is calculated to obtain the ratio deviation value.

In S212, the target frame data stream size is determined based on the screen ratio, the ratio deviation value, and the frame data stream parameter.

The frame data stream parameter includes the multiple preset frame data stream sizes (such as the multiple camera frame data stream sizes shown in FIG. 3). Each frame data stream size has a corresponding frame data stream width and a corresponding frame data stream height. Taking the frame data stream size 4090 × 3072 shown in FIG. 3 is used as an example, the frame data stream width is 3072 and the frame data stream height is 4090. The aspect ratio of the frame data stream corresponding to the frame data stream size (such as the aspect ratio for the frame data stream size shown in FIG. 3) can be further calculated through the frame data stream width and the frame data stream height corresponding to the frame data stream size. As shown in FIG. 3, the aspect ratio of the frame data stream corresponding to the frame data stream size 4090 × 3072 is the ratio of the frame data stream width to the frame data stream height, that is, 3072 / 4090 = 0.75. It can be seen that the aspect ratio of the frame data stream corresponding to each frame data stream size in the frame data stream parameter can be calculated through the frame data stream parameter. Furthermore, the aspect ratio of the frame data stream, the screen ratio, and the ratio deviation value are compared to determine the target frame data stream size. The target frame data stream size is the frame data stream size that is in the frame data stream parameter and relatively approximates to the screen size.

For example, the aspect ratio of the frame data stream corresponding to each frame data stream size in the frame data stream parameter is calculated. Then, the aspect ratio of each frame data stream, the screen ratio, and the ratio deviation value are compared separately so that the target frame data stream size is determined from the frame data stream parameter.

It is to be noted that camera frame data streams of different targets scanned by the code scanning device have different sizes and aspect ratios. The camera frame data stream corresponding to the target frame data stream size can fill the screen of the code scanning device, is maximally adaptable to the camera frame data streams having the different sizes and aspect ratios, and can better fit the optimal visual perception of the user during use, that is, the content seen by the user is the content scanned and recognized.

In S220, the coordinates of the coordinate points of the special-shaped code region are acquired based on the target frame data stream size.

In S230, the mask image is generated based on the target frame data stream size and the coordinates of the coordinate points of the special-shaped code region.

In S240, the camera frame data stream is processed based on the mask image to obtain the special-shaped code, and the special-shaped code is recognized to obtain the recognition result.

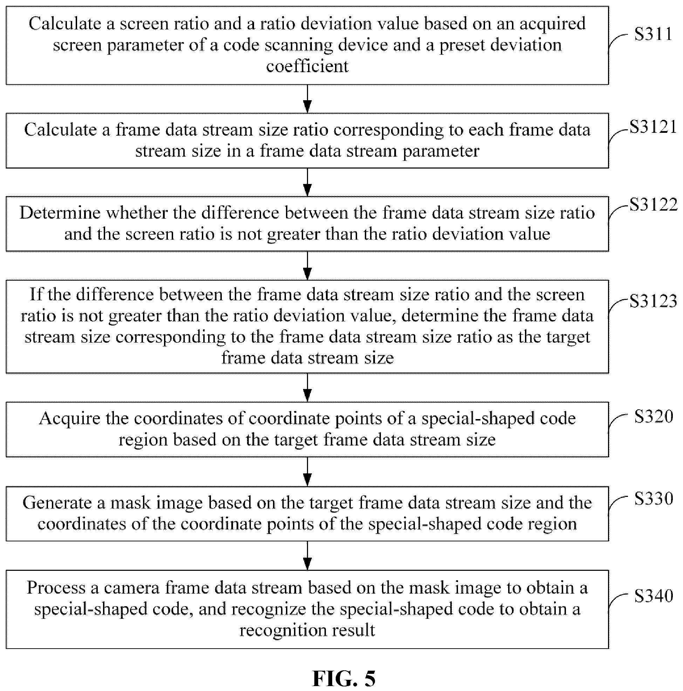

FIG. 5 is a flowchart of a method of scanning and recognizing a special-shaped code according to an embodiment of the present application. Referring to FIG. 5, the method optimizes the step in which "the target frame data stream size is determined based on the screen ratio, the ratio deviation value, and the frame data stream parameter" in the above embodiment. It is to be noted that for parts not detailed in this embodiment, reference may be made to descriptions in other embodiments. The method includes the steps below.

In S311, the screen ratio and the ratio deviation value are calculated based on the acquired screen parameter of the code scanning device and the preset deviation coefficient.

In S3121, a frame data stream size ratio corresponding to each frame data stream size in the frame data stream parameter is calculated.

It is to be noted that the frame data stream parameter includes the multiple frame data stream sizes.

For example, the multiple frame data stream sizes refer to the multiple camera frame data stream sizes as shown in FIG. 3. Each of the camera frame data stream sizes has the corresponding frame data stream width and the corresponding frame data stream height. Taking the frame data stream size 4090 × 3072 shown in FIG. 3 as an example, the frame data stream width is 3072 and the frame data stream height is 4090. The aspect ratio of the frame data stream corresponding to the frame data stream size (such as the aspect ratio for the frame data stream size shown in FIG. 3) can be further calculated through the frame data stream width and the frame data stream height corresponding to the frame data stream size. The aspect ratio of the frame data stream is the frame data stream size ratio. As shown in FIG. 3, the frame data stream size ratio corresponding to the frame data stream size 4090 × 3072 is the ratio of the frame data stream width to the frame data stream height, that is, 3072 / 4090 = 0.75.

For example, the frame data stream width and frame data stream height of each frame data stream size in the frame data stream parameter are acquired, and then the ratio of the frame data stream width to the frame data stream height is calculated so that the frame data stream size ratio corresponding to each frame data stream size one to one is obtained.

In S3122, it is determined whether the difference between the frame data stream size ratio and the screen ratio is not greater than the ratio deviation value.

Taking one of frame data stream size ratios as an example, the difference between the frame data stream size ratio and the screen ratio is calculated, and then it is determined whether this difference is not greater than the ratio deviation value.

In S3123, if the difference between the frame data stream size ratio and the screen ratio is not greater than the ratio deviation value, the frame data stream size corresponding to the frame data stream size ratio is determined as the target frame data stream size.

If the difference between the frame data stream size ratio and the screen ratio is not greater than the ratio deviation value, it is indicated that the camera frame data stream corresponding to the frame data stream size corresponding to the frame data stream size ratio can fill the screen of the code scanning device. Additionally, the frame data stream size corresponding to this frame data stream size ratio is used as the target frame data stream size. Subsequently, the code scanning device captures a camera frame data stream that has the same size as the target frame data stream.

For example, if it is determined that the difference between the frame data stream size ratio and the screen ratio is not greater than the ratio deviation value, the frame data stream size corresponding to the frame data stream size ratio is used as the target frame data stream size.

It is to be noted that the camera frame data stream corresponding to the target frame data stream size can fill the screen of the code scanning device, is maximally adaptable to the camera frame data streams having the different sizes and aspect ratios, and can better fit the optimal visual perception of the user during use, that is, the content seen by the user is the content scanned and recognized.

In S320, the coordinates of the coordinate points of the special-shaped code region are acquired based on the target frame data stream size.

In S330, the mask image is generated based on the target frame data stream size and the coordinates of the coordinate points of the special-shaped code region.

In S340, the camera frame data stream is processed based on the mask image to obtain the special-shaped code, and the special-shaped code is recognized to obtain the recognition result.

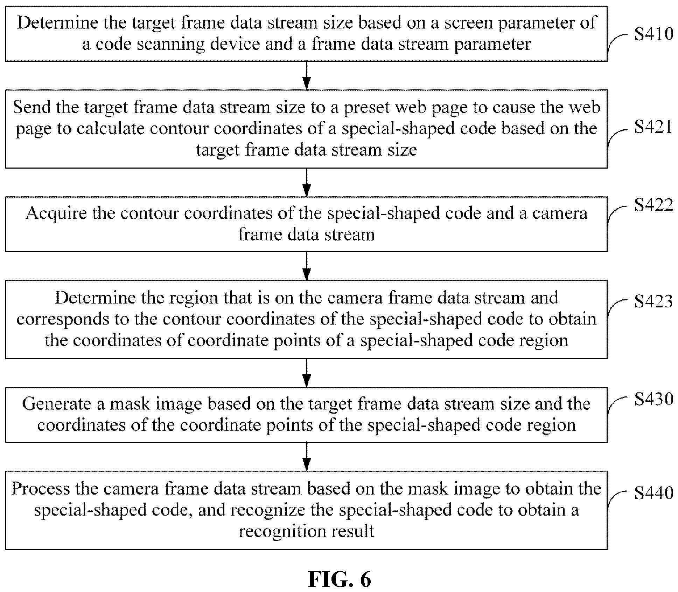

FIG. 6 is a flowchart of a method of scanning and recognizing a special-shaped code according to an embodiment of the present application. Referring to FIG. 6, the method optimizes the step in which "the coordinates of the coordinate points of the special-shaped code region are acquired based on the target frame data stream size" in the above embodiment. It is to be noted that for parts not detailed in this embodiment, reference may be made to descriptions in other embodiments. The method includes the steps below.

In S410, the target frame data stream size is determined based on the screen parameter of the code scanning device and the frame data stream parameter.

In S421, the target frame data stream size is sent to a preset web page to cause the preset web page to calculate contour coordinates of the special-shaped code based on the target frame data stream size.

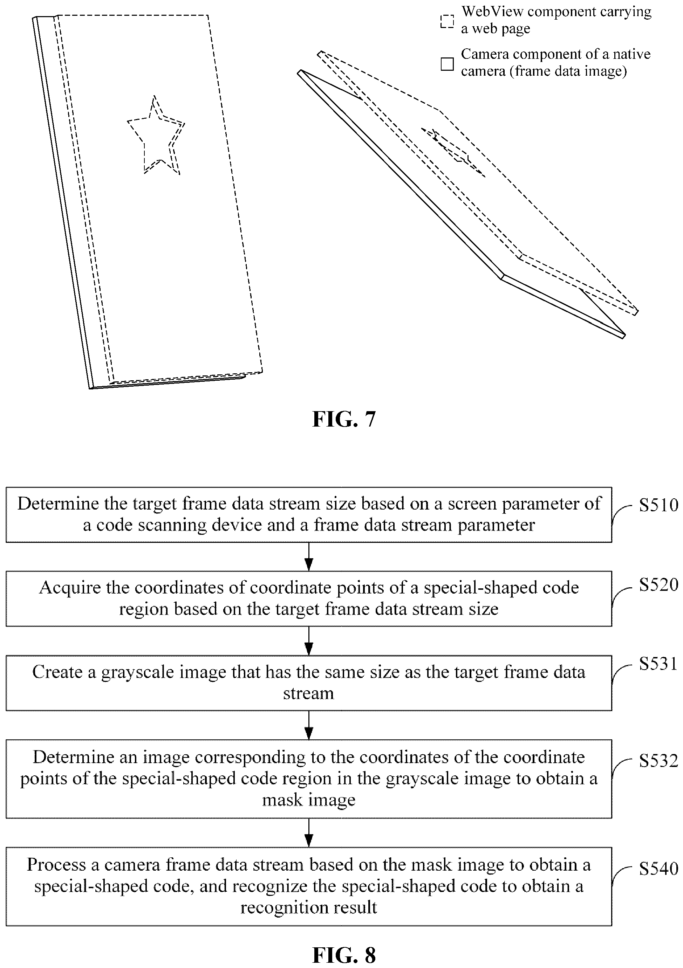

For example, the web page refers to a functional web page Web preset in the code scanning device. The functional web page Web is configured to receive the target frame data stream size from the code scanning device so that the contour coordinates of the special-shaped code are calculated. The contour coordinates of the special-shaped code refer to contour coordinates of the special-shaped code on the camera frame data stream. For example, referring to FIG. 7, the functional web page Web generates a Camera component of a native camera, where the Camera component has the same size as the target frame data stream. A Web View component having a hollow region and configured to carry a Web page is preset in the functional web page Web. The hollow region has the same shape as the special-shaped code. The functional web page Web also causes the WebView component to have the same size as the Camera component of the native camera. The functional web page Web acquires coordinates of an image mapped onto the Camera component of the native camera through the hollow region of the Web View component so that the contour coordinates of the special-shaped code are obtained.

For example, the code scanning device sends the acquired target frame data stream size to the preset web page Web. The preset web page Web calculates the contour coordinates of the special-shaped code based on the target frame data stream size.

In S422, the contour coordinates of the special-shaped code and the camera frame data stream are acquired.

The camera frame data stream refers to multiple consecutive frames of images acquired by the code scanning device when scanning and capturing the target with the special-shaped code. For example, the target with the special-shaped code may be the product label with the special-shaped code in the shape of a five-pointed star.

For example, after calculating the contour coordinates of the special-shaped code, the functional web page Web sends the contour coordinates of the special-shaped code to the code scanning device through a Jsbridge interface so that the code scanning device acquires the contour coordinates of the special-shaped code. In addition, during the acquisition of the contour coordinates of the special-shaped code, the user also scans the target with the special-shaped code using the code scanning device so that the camera frame data stream is acquired.

In S423, the region that is on the camera frame data stream and corresponds to the contour coordinates of the special-shaped code is determined to obtain the coordinates of the coordinate points of the special-shaped code region.

The camera frame data stream and the contour coordinates of the special-shaped code are in the same size dimension. The coordinates of the contour region that is on the camera frame data stream and corresponds to the contour coordinates of the special-shaped code are the coordinates of the coordinate points of the special-shaped code region.

For example, a corresponding contour is determined on the frame data stream of the special-shaped code through the contour coordinates of the special-shaped code, and the region within the contour is used as the coordinates of the coordinate points of the special-shaped code region.

It is to be noted that the coordinates of the coordinate points of the special-shaped code region are determined, thereby facilitating further subsequent acquisition of the special-shaped code from the camera frame data stream according to the coordinates of the coordinate points of the special-shaped code region.

In S430, the mask image is generated based on the target frame data stream size and the coordinates of the coordinate points of the special-shaped code region.

In S440, the camera frame data stream is processed based on the mask image to obtain the special-shaped code, and the special-shaped code is recognized to obtain the recognition result.

FIG. 8 is a flowchart of a method of scanning and recognizing a special-shaped code according to an embodiment of the present application. Referring to FIG. 8, the method optimizes the step in which "the mask image is generated based on the target frame data stream size and the coordinates of the coordinate points of the special-shaped code region" in the above embodiment. It is to be noted that for parts not detailed in this embodiment, reference may be made to descriptions in other embodiments. The method includes the steps below.

In S510, the target frame data stream size is determined based on the screen parameter of the code scanning device and the frame data stream parameter.

In S520, the coordinates of the coordinate points of the special-shaped code region are acquired based on the target frame data stream size.

In S531, a grayscale image that has the same size as the target frame data stream is created.

The RGB values of each pixel in the grayscale image are (255, 255, 255), that is, the grayscale image is a pure white image.

For example, the code scanning device creates the grayscale image that has the same size as the target frame data stream, where the RGB values of each pixel in the grayscale image are (255, 255, 255).

In S532, an image corresponding to the coordinates of the coordinate points of the special-shaped code region in the grayscale image is determined to obtain the mask image.

The camera frame data stream scanned and captured by the code scanning device has the same size as the target frame data stream, and the grayscale image has the same size as the target frame data stream. Therefore, the grayscale image has the same size as the camera frame data stream. Thus, the code scanning device can determine the image corresponding to the coordinates of the coordinate points of the special-shaped code region on the camera frame data stream in the grayscale image. Furthermore, the RGB values of each pixel in this image may be set to (0, 0, 0). Thus, a pure black region corresponding to the coordinates of the coordinate points of the special-shaped code region can be generated in the original pure white image so that the mask image is obtained.

For example, the code scanning device determines the image corresponding to the coordinates of the coordinate points of the special-shaped code region on the camera frame data stream in the grayscale image. Additionally, the RGB values of each pixel in this image are set to (0, 0, 0), thereby converting the image into a pure black image. Thus, the mask image is obtained.

It is to be noted that the pure black region corresponding to the mask image has the same position and size as the special-shaped code on the camera frame data stream. The mask image is generated, thereby facilitating the subsequent determination of the special-shaped code from the camera frame data stream.

In S540, the camera frame data stream is processed based on the mask image to obtain the special-shaped code, and the special-shaped code is recognized to obtain the recognition result.

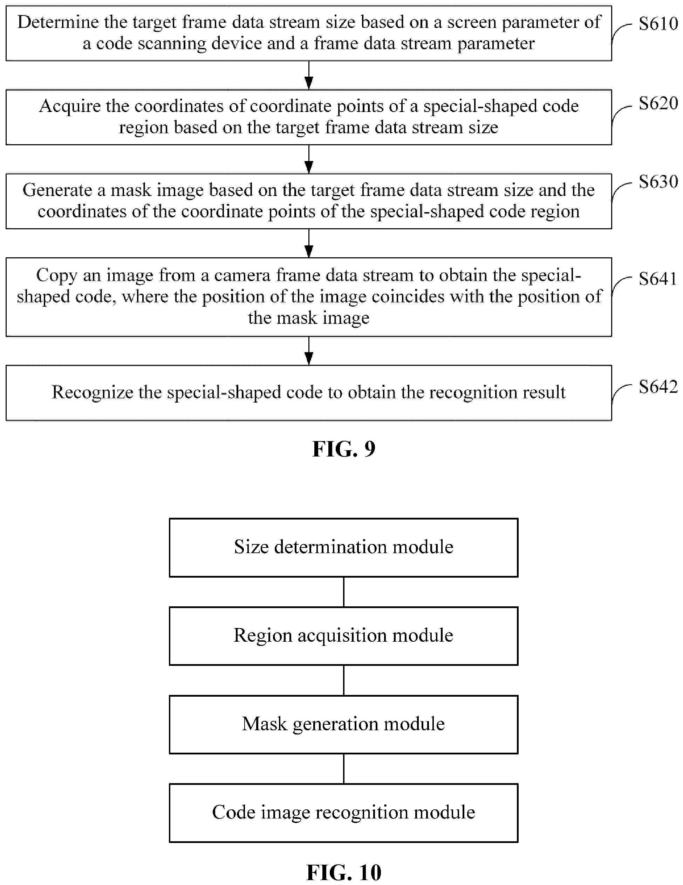

FIG. 9 is a flowchart of a method of scanning and recognizing a special-shaped code according to an embodiment of the present application. Referring to FIG. 9, the method optimizes the step in which "the coordinates of the coordinate points of the special-shaped code region are acquired based on the target frame data stream size" in the above embodiment. It is to be noted that for parts not detailed in this embodiment, reference may be made to descriptions in other embodiments. The method includes the steps below.

In S610, the target frame data stream size is determined based on the screen parameter of the code scanning device and the frame data stream parameter.

In S620, the coordinates of the coordinate points of the special-shaped code region are acquired based on the target frame data stream size.

In S630, the mask image is generated based on the target frame data stream size and the coordinates of the coordinate points of the special-shaped code region.

In S641, an image is copied from the camera frame data stream to obtain the special-shaped code, where the position of the image coincides with the position of the mask image.

The camera frame data stream has the same size as the grayscale image where the mask image is located. The mask image in the grayscale image has the same position as the special-shaped code in the camera frame data stream. Therefore, the image at the position in the camera frame data stream coinciding with the position of the mask image is the special-shaped code.

For example, the image is copied from the camera frame data stream so that the special-shaped code is obtained, where the position of the image coincides with the position of the mask image.

In S642, the special-shaped code is recognized to obtain the recognition result.

It is to be understood that although the steps in the flowcharts involved in the preceding embodiments are shown sequentially according to the indications of arrows, the steps are not necessarily performed in the sequence indicated by the arrows. Unless expressly stated herein, there is no strict limit to the sequence in which the steps are performed, and the steps may be performed in other sequences. In addition, at least some steps in the flowcharts involved in the preceding embodiments may include multiple steps or multiple stages. The steps or the stages are not necessarily performed at the same moment, but may be performed at different moments. The steps or the stages are not necessarily performed in sequence, but may be performed in turn or alternately with another step or at least some steps or stages in another step.

Based on the same inventive concept, an embodiment of the present disclosure further provides an apparatus of scanning and recognizing a special-shaped code configured to implement the preceding method of scanning and recognizing a special-shaped code. The implementation solution provided by this apparatus to resolve the problem is similar to the implementation solution recorded in the preceding method. Therefore, for specific limitations in the one or more embodiments of the apparatus of scanning and recognizing a special-shaped code provided below, reference may be made to the preceding limitations on the method of scanning and recognizing a special-shaped code. The details are not repeated here.

In this embodiment, as shown in FIG. 10, the apparatus of scanning and recognizing a special-shaped code is provided. The apparatus includes a size determination module, a region acquisition module, a mask generation module, and a code image recognition module.

The size determination module is configured to determine a target frame data stream size based on a screen parameter of a code scanning device and a frame data stream parameter.

The region acquisition module is configured to acquire coordinates of coordinate points of a special-shaped code region based on the target frame data stream size.

The mask generation module is configured to generate a mask image based on the target frame data stream size and the coordinates of the coordinate points of the special-shaped code region.

The code image recognition module is configured to process a camera frame data stream based on the mask image to obtain a special-shaped code and configured to recognize the special-shaped code to obtain a recognition result.

The modules in the preceding apparatus may be completely or partially implemented by software, hardware, and a combination thereof. Each of the preceding modules may be embedded in or independent of a processor in a computer device in a hardware form or stored in a memory in a computer device in a software form so that the processor calls and performs operations corresponding to each of the preceding modules.

It is to be noted that in this embodiment, the target frame data stream size is determined based on the screen parameter of the code scanning device and the frame data stream parameter, the coordinates of the coordinate points of the special-shaped code region are acquired based on the target frame data stream size, the mask image is generated based on the target frame data stream size and the coordinates of the coordinate points of the special-shaped code region, and the camera frame data stream is processed based on the mask image so that the special-shaped code is obtained, and the special-shaped code is recognized so that the recognition result is obtained. Through the implementation of the preceding method, the target frame data stream size and the coordinates of the coordinate points of the special-shaped code region are calculated, which can facilitate further calculation of the mask image for indicating the region where the special-shaped code is located in the target frame data stream. Then, the special-shaped code is determined from the target frame data stream through the mask image so that further subsequent recognition of the special-shaped code is facilitated. Thus, the recognition of the special-shaped code on the camera frame data stream is facilitated.

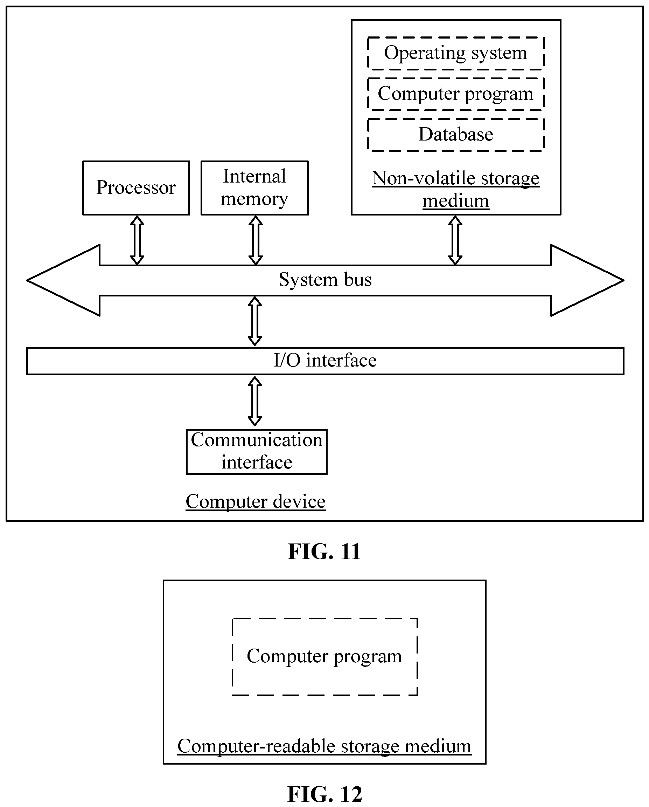

In an embodiment, a computer device is provided, which may be a server. A diagram showing the internal structure of the computer device may be shown in FIG. 11. The computer device includes a processor, a memory, and a network interface which are connected to each other via a system bus. The processor of the computer device is configured to provide computing and control capabilities. The memory of the computer device includes a non-volatile storage medium and an internal memory. The non-volatile storage medium stores an operating system, a computer program, and a database. The internal memory provides an environment for running the operating system and the computer program in the non-volatile storage medium. The database of the computer device is configured to store data. The network interface of the computer device is configured to communicate with an external terminal through a network connection. When executed by the processor, the computer program implements a method of scanning and recognizing a special-shaped code.

It is to be understood by those skilled in the art that the structure shown in FIG. 11 is only a block diagram of part of structures related to the solutions of the present disclosure and does not limit the computer device to which the solutions of the present disclosure are applied, and a specific computer device may include more or fewer components than those shown in FIG. 11, may be a combination of some components, or may have a different layout of components.

In an embodiment, a computer-readable storage medium is provided. As shown in FIG. 12, the computer-readable storage medium stores a computer program. When executed by a processor, the computer program implements the steps in the preceding method embodiments.

In an embodiment, a computer program product is provided. The computer program product includes a computer program. When executed by a processor, the computer program implements the steps in the preceding method embodiments.

It is to be noted that both user information (including but not limited to user device information and user personal information) and data (including but not limited to data used for analysis, stored data, and displayed data) involved in the present disclosure are authorized by the user or fully authorized by all parties.

It is to be understood by those of ordinary skill in the art that all or part of the processes in the methods in the preceding embodiments may be implemented by related hardware instructed by the computer program. The computer program may be stored in a non-volatile computer-readable storage medium. During the execution of the computer program, the processes in the preceding method embodiments may be included. Any reference to the memory, database, or other media used in the embodiments provided in the present disclosure may each include at least one of a non-volatile and a volatile memory. The non-volatile memory may include a read-only memory (ROM), a magnetic tape, a floppy disk, a flash memory, an optical memory, a high-density embedded non-volatile memory, a resistive memory (ReRAM), a magnetoresistive random access memory (MRAM), a ferroelectric random access memory (FRAM), a phase change memory (PCM), a graphene memory, and the like. The volatile memory may include a random access memory (RAM), an external cache memory, or the like. For the purpose of description instead of limitation, the RAM is available in multiple forms, such as a static RAM (SRAM) or a dynamic RAM (DRAM). The databases involved in the embodiments provided in the present disclosure may include at least one of relational databases and non-relational databases. The non-relational databases may include blockchain-based distributed databases and the like and are not limited thereto. The processors involved in the embodiments provided in the present disclosure may be general-purpose processors, central processing units, graphics processors, digital signal processors, programmable logic devices, quantum computing-based data processing logic devices, and the like and are not limited thereto.

The technical features of the preceding embodiments may be combined in any manner. For the brevity of description, not all possible combinations of the technical features in the preceding embodiments are described. However, as long as the combinations of these technical features do not conflict, these combinations shall be within the scope of the specification.

The preceding embodiments are only several embodiments of the present disclosure, and the specific and detailed description thereof cannot be construed as limiting the scope of the present disclosure.

## Claims

1. A method of scanning and recognizing a special-shaped code, comprising:
determining a target frame data stream size based on a screen parameter of a code scanning device and a frame data stream parameter (S110, S410, S510, S610);
acquiring coordinates of coordinate points of a special-shaped code region based on the target frame data stream size (S120, S220, S320, S520, S620);
generating a mask image based on the target frame data stream size and the coordinates of the coordinate points of the special-shaped code region (S130, S230, S330, S430, S630); and
processing a camera frame data stream based on the mask image to obtain the special-shaped code, and recognizing the special-shaped code to obtain a recognition result (S140, S240, S340, S440, S540, S642).

2. The method according to claim 1, wherein determining the target frame data stream size based on the screen parameter of the code scanning device and the frame data stream parameter comprises:
calculating a screen ratio and a ratio deviation value based on the acquired screen parameter of the code scanning device and a preset deviation coefficient (S211, S311); and
determining the target frame data stream size based on the screen ratio, the ratio deviation value, and the frame data stream parameter (S212).

3. The method according to claim 2, wherein the frame data stream parameter comprises a plurality of frame data stream sizes, and determining the target frame data stream size based on the screen ratio, the ratio deviation value, and the frame data stream parameter comprises:
for each of the plurality of frame data stream sizes in the frame data stream parameter, calculating a frame data stream size ratio corresponding to the frame data stream size (S3121);
determining whether a difference between the frame data stream size ratio and the screen ratio is not greater than the ratio deviation value (S3122); and
in response to the difference between the frame data stream size ratio and the screen ratio being not greater than the ratio deviation value, determining the frame data stream size as the target frame data stream size (S3123).

4. The method according to claim 1, wherein acquiring the coordinates of the coordinate points of the special-shaped code region based on the target frame data stream size comprises:
sending the target frame data stream size to a preset web page to cause the preset web page to calculate contour coordinates of the special-shaped code based on the target frame data stream size (S421);
acquiring the contour coordinates of the special-shaped code and the camera frame data stream (S422); and
determining a region that is on the camera frame data stream and corresponds to the contour coordinates of the special-shaped code to obtain the coordinates of the coordinate points of the special-shaped code region (S423).

5. The method according to claim 1, wherein generating the mask image based on the target frame data stream size and the coordinates of the coordinate points of the special-shaped code region comprises:
creating a grayscale image whose size is the same as the target frame data stream size (S531); and
determining an image in the grayscale image to obtain the mask image, wherein the image in the grayscale image corresponds to the coordinates of the coordinate points of the special-shaped code region (S532).

6. The method according to claim 1, wherein processing the camera frame data stream based on the mask image to obtain the special-shaped code comprises:
copying an image from the camera frame data stream to obtain the special-shaped code, wherein a position of the image coincides with a position of the mask image (S641).

7. A computer device, comprising a memory and a processor, wherein the memory stores a computer program, and the processor, when executing the computer program, implements the method according to any one of claims 1 to 6.

8. A computer-readable storage medium storing a computer program, wherein when executed by a processor, the computer program implements the method according to any one of claims 1 to 6.

9. A computer program product, comprising a computer program, wherein when executed by a processor, the computer program implements the method according to any one of claims 1 to 6.
